Europäisches Patentamt

European Patent Office

Office européen des brevets

(11) Publication number: **0 128 353**
**A2**

(12) **EUROPEAN PATENT APPLICATION**

(21) Application number: **84105184.0**

(22) Date of filing: **09.05.84**

(51) Int. Cl.³: **G 11 C 9/06**

(30) Priority: **09.06.83 US 502887**

(43) Date of publication of application: **19.12.84**
**Bulletin 84/51**

(84) Designated Contracting States: **DE FR GB**

(71) Applicant: **International Business Machines Corporation,
Old Orchard Road, Armonk, N.Y. 10504 (US)**

(72) Inventor: **McGilvray, Bruce L., McAllister Drive, Pleasant
Valley, N.Y. 12569 (US)**
Inventor: **Sutton, Arthur J., 14 Whitehill Place, Cold
Spring, N.Y. 10516 (US)**

(74) Representative: **Suringar, Willem Joachim, IBM
Nederland N.V. Patent Operations Watsonweg 2,
NL-1423 ND Uithoorn (NL)**

(54) **Error recovery of non-store-through cache.**

(57) In a multiprocessing system, specific flags that are set
at various times during a cache-to-cache transfer will, in the
event of an error, enable the system to identify the status of
each cache involved in the transfer. Different procedures
are utilized for the cache from which data was being fetched
and the cache to which data was being stored, as well as
the main memory. If a castout was in process, then main
memory may not have been updated and may contain ob-
solete data. In that case, the mechanism will force an uncor-
rectable error into the target location to insure that obsolete
data is not subsequently utilized by the system.

CP A

ERROR RECOVERY OF NON-STORE-THROUGH CACHE

## Background of the Invention

This invention relates to insurance of data integrity in a store-in-cache data processing system. More specifically, it relates to preserving system and data integrity when errors occur during cache-to-cache transfers.

One technique for increasing performance of fetching data for main storage utilizes a cache with "store-through" capability, i.e., data that is altered is stored into the cache as well as to main storage, the master copy.

An alternative design is the "store-in-cache" capability wherein changed or altered data is maintained in the cache and a directory of changed (altered) data is also maintained so that if a user requests data that has been changed and is contained within the cache, that data will be "cast out" (stored back into main storage) or transferred directly from the cache to the requestor. In this design the master copy of data remains directly in the cache.

A store-in-cache system presents unique problems when an error occurs during a fetch or store operation to the cache because the master copy of data is in the cache rather than in the main storage.

## Summary of the Invention

This invention, as claimed, insures data integrity of a system by taking care of errors which occur during a fetching or storing operation. Errors can, for example, be processor or other uncorrectable errors occurring during the fetch, or a processor error occurring within the checking block before all of the data has been completely stored from the cache.

This invention takes care of data fetched from or stored to main storage as well as data fetched or stored between multiple processors or caches.

Where only an address is salvageable for the store case, this invention provides a mechanism to force an uncorrectable error in that location to

PO 9-83-004

insure data integrity.

## Description of the Drawings

Fig. 1 shows the general organization of a store-in-cache system.

Figs. 2 and 3 show the data flow of a Buffer Control Element used with this invention.

Fig. 4 illustrates Service Processor communication with the Buffer Control Element and the System Controller.

Fig. 5 shows specific steps to recover data fetched or stored when an error occurs.

Fig. 6 illustrates a cache-to-cache transfer between multiple processors or caches.

Fig. 7 shows the recovery steps after detection of a store or fetch error during a cache-to-cache transfer.

## Detailed Description

A preferred embodiment of this invention may be implemented to an IBM 3081 Model K Processing System. Further descriptions of details of such a system can be found in the following manuals, all of which are available from IBM Corporation.

1) 3081 Functional Characteristics (Form No. GA220-7076);

2) 3081 Channel Characteristics and Configuration Guide (Form No. GA22-7077);

3) 3082 Processor Controller Maintenance (Form No. SY22-7063);

4) 3082 Processor Controller Theory Diagrams (Form No. SY22-7064);

5) Processor Unit Introduction/Maintenance (Form No. SY22-7061);

6) Central Storage and External Data Controller Introduction Maintenance (Form No. SY22-7087);

7) Central Storage Introduction/Maintenance (Form No. SY22-7086).

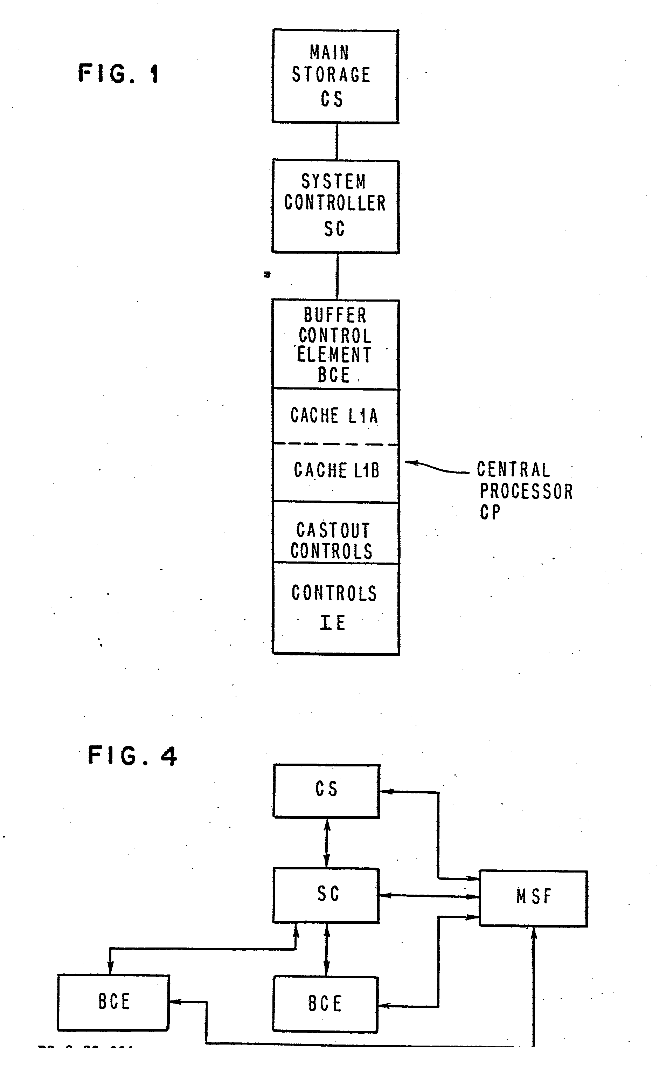

Fig. 1 shows the general organization of a store-in-cache system. Data fetched to the cache from main storage is the master copy of data. The System Controller (SC) and the Buffer Control Element (BCE) both have address directories indicating the location of data.

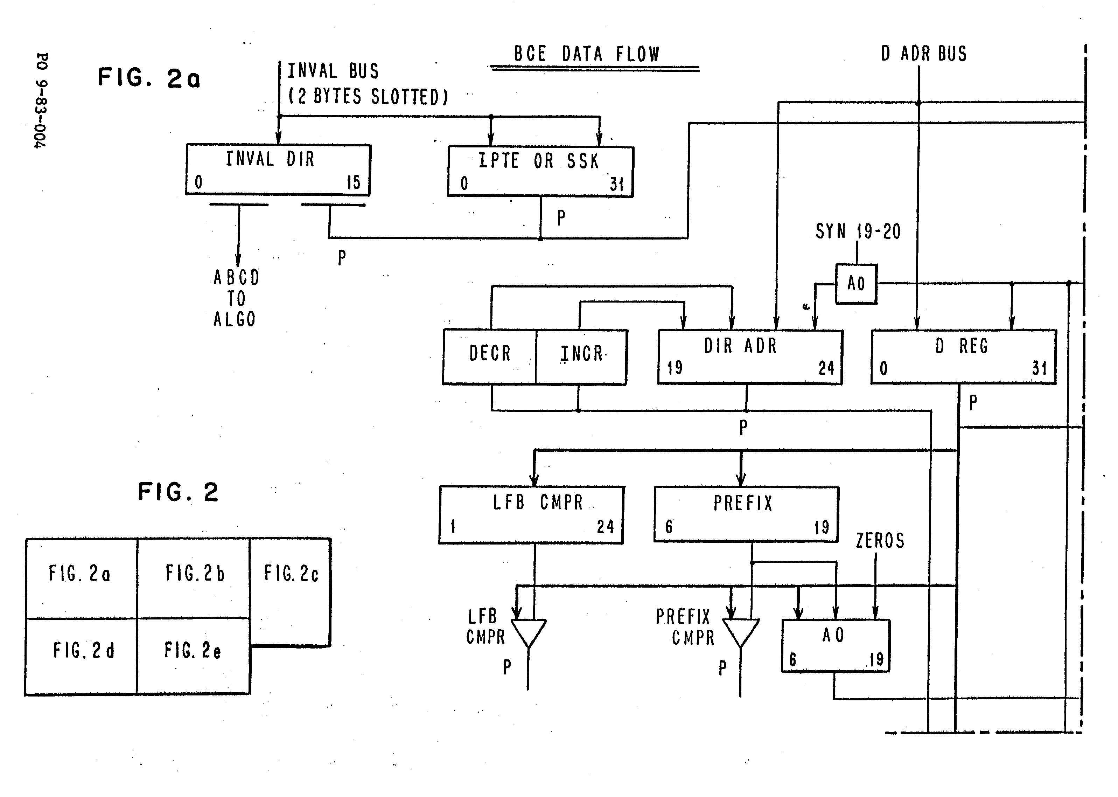

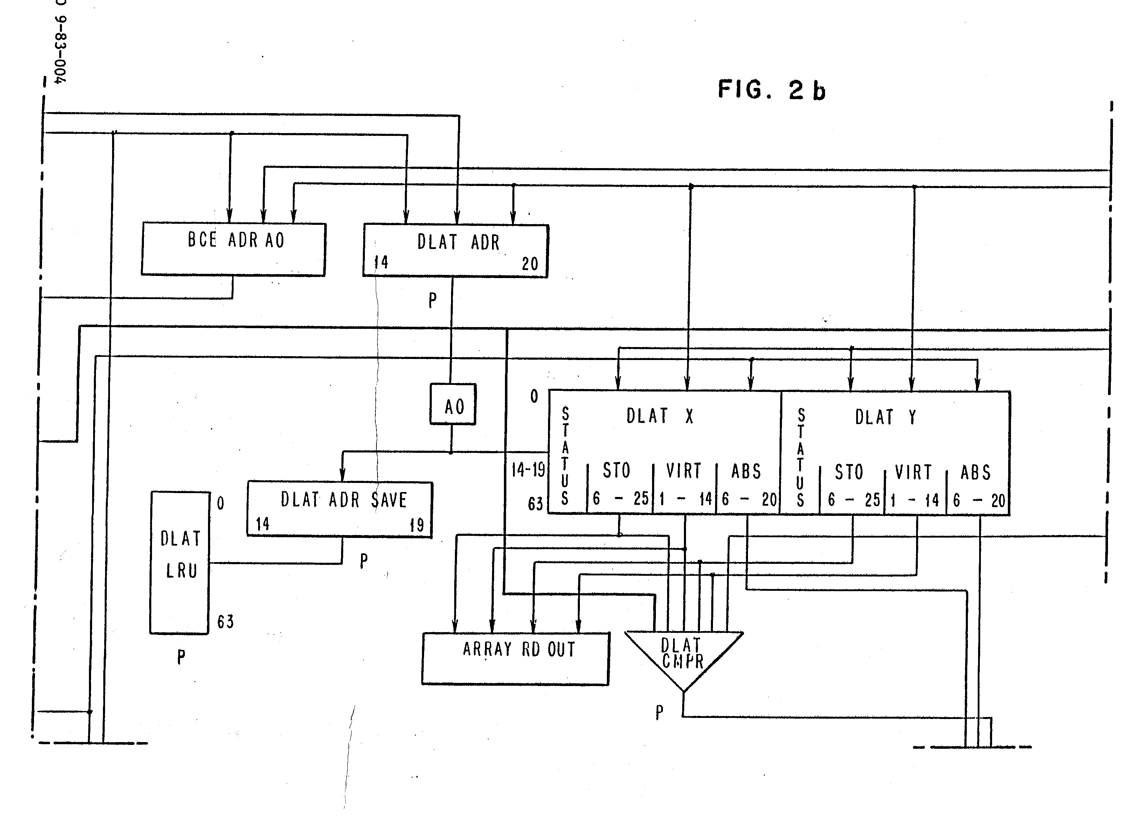

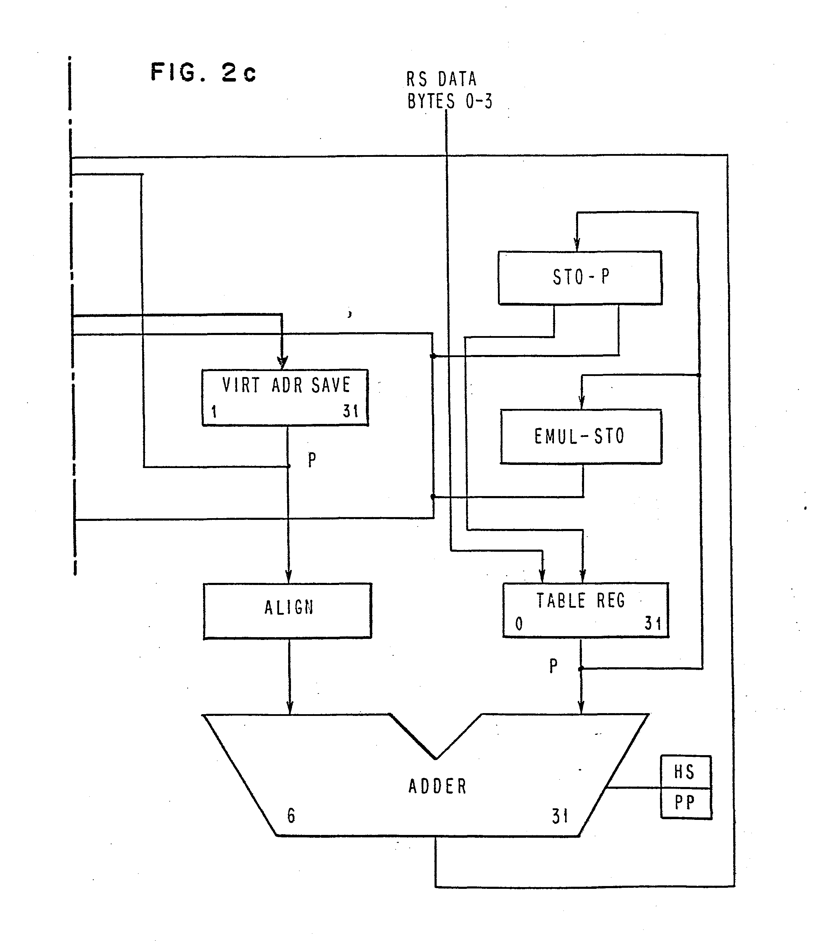

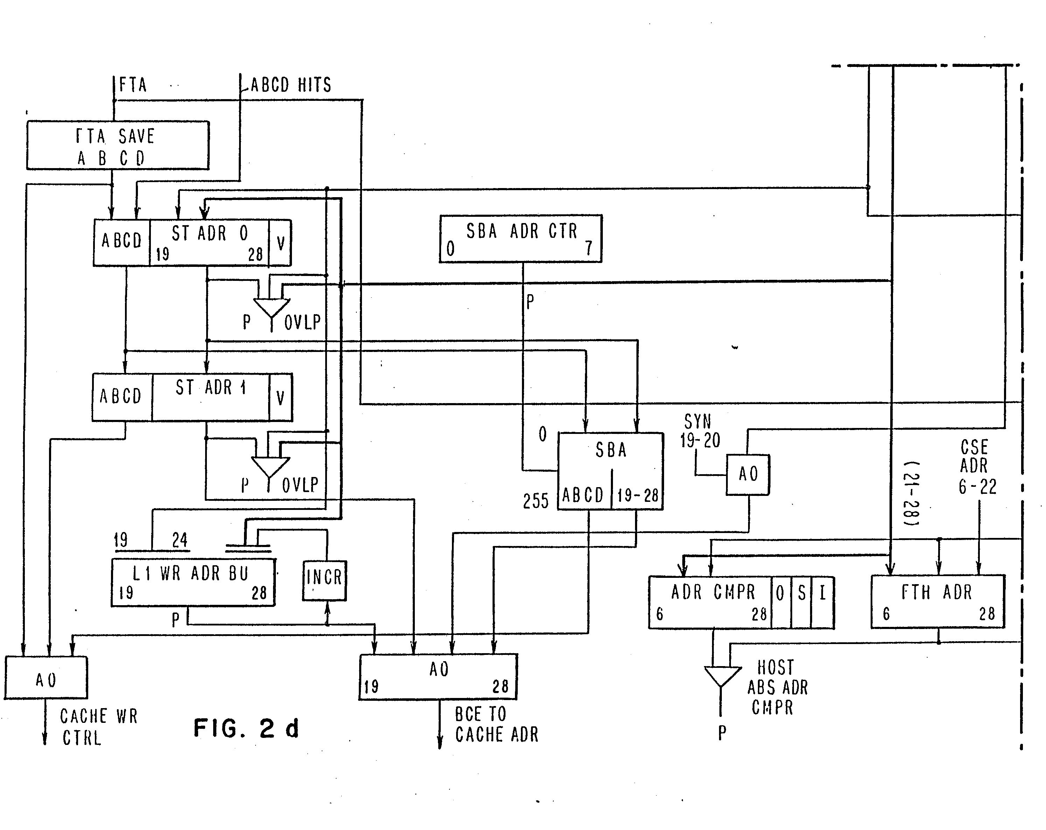

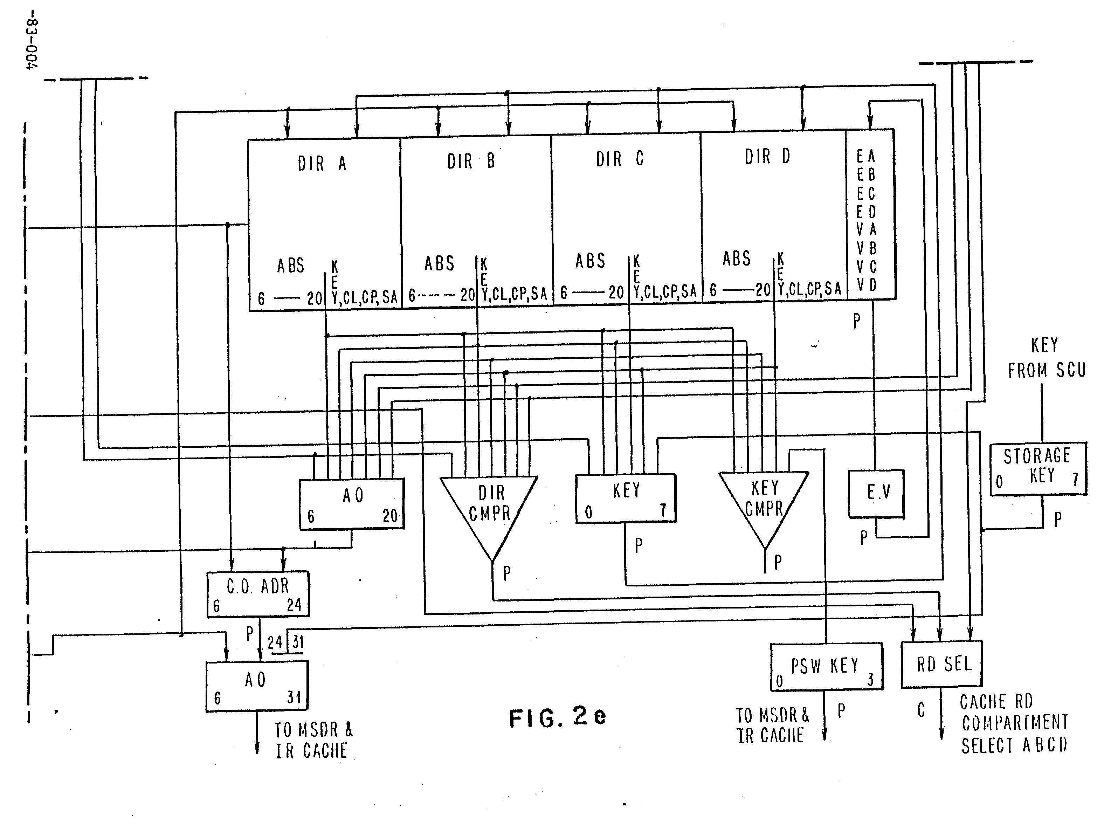

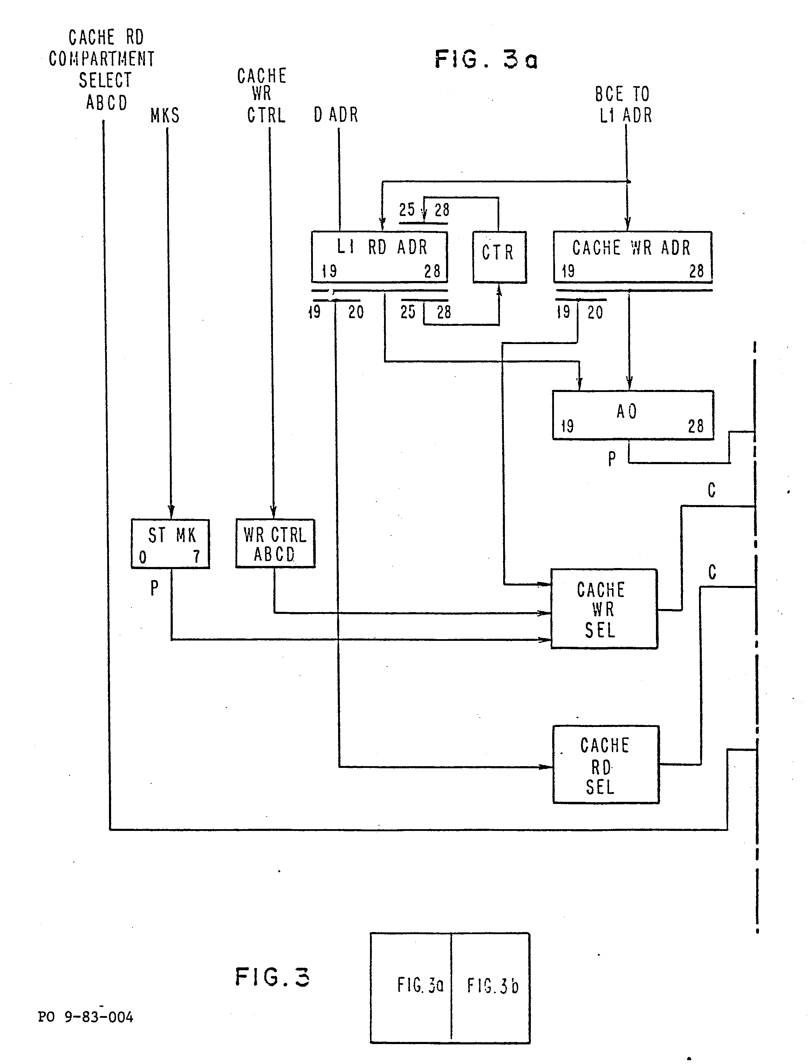

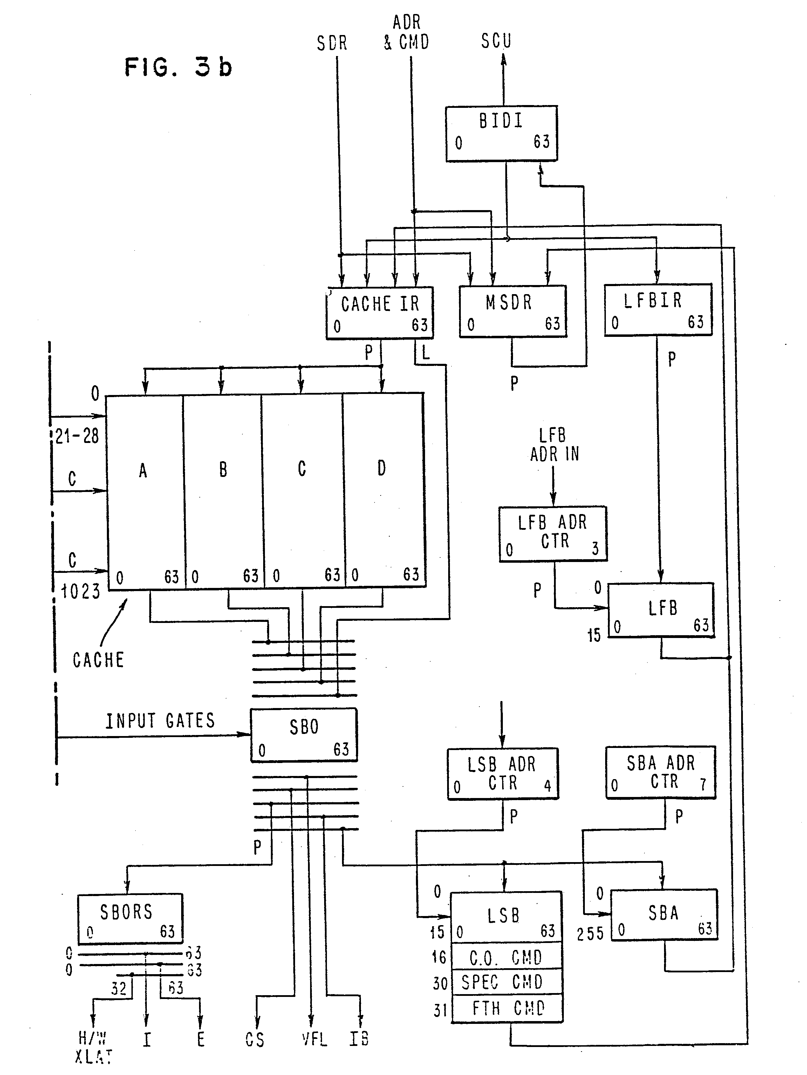

The BCE is shown in more details in Figs. 2 and 3. It contains a 64K byte cache buffer storage divided into two physical modules L1A and L1B, as shown in Fig. 1, and supplies the Central Processor (CP) with all of its storage access requirements. Most data (with the exception of control store accesses which go to its own buffer and certain special access commands) are fetched from the cache. All store operations are done in the cache. The instruction element (IE) requests or stores data from or to the cache while the SC provides data for the cache from main storage (CS) and broadcasts for all the caches associated with each CP.

Two conditions may exist within the BCE when a CP encounters an error and its clocks are stopped. The BCE may be placing data in main storage or accessing data from main storage.

This invention provides a means of recovering from either error condition without losing system integrity. It allows the system to recover and/or keep running. The invention prevents storing of bad data over good data and it prevents the use of old obsolete data. An alternative to using this invention is to stop the system to prevent either of the two events from occurring. However, this would necessitate a new initial program load (IPL) and clear operation.

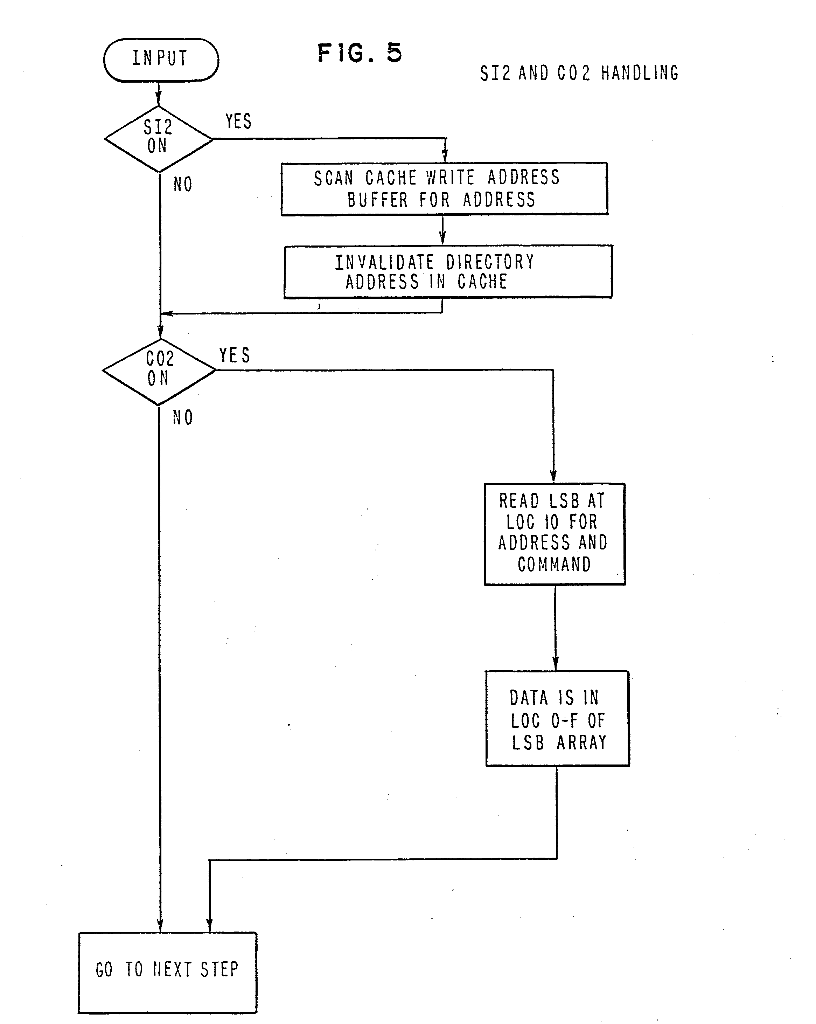

The preferred implementation uses a programmed Service Processor (MSF, Maintenance and Service Facility) to assist in the recovery. Although the invention could be implemented in hardware alone, or with a mixture of new hardware and software, the choice described is more economical. Fig. 4 illustrates a system including a hardware service processor (MSF) with a capability to scan data from the BCE and having its own independent path to main storage (CS) through the SC.

PO 9-83-004

If an error occurs while a CP is fetching data from CS, a special trigger SI2 is turned on by the BCE. When the error occurs, the CP clocks are stopped, the MSF receives an error signal and an internal module of Error Handler microcode is invoked.

When an error has occurred and the clocks stop, the SI2 trigger being on indicates that the BCE has assigned a line of data to its directory but has not yet received the entire line of data in the cache. The Error Handler in the MSF will then invalidate the directory address in the CP cache directory. As shown in Fig. 5, the following steps will be performed.

1)   Scan out the cache write address buffer and using this address, read the Directory "Exclusive" and "Valid" bits (E and V). (If the cache write address buffer check trigger is on, the directory address has been destroyed. System damage has occurred and the CP must be set to checkstop state, bypassing the following steps. The contents of the CP cache are set "invalid" in storage for all exclusive addresses.)

2)   Turn off the proper E and V bits from step 1 using the Fetch Save Register. (Invert the contents of the Fetch Save Register and, with both halves of the Directory Exclusive and Valid bits store the results.)

3)   Write the Directory Exclusive and Valid array with the new data. (If an error occurs in this step the CP must be put in a checkstop state and the contents of the cache set "invalid" in storage as a base. Further information may be found in the IBM Technical Disclosure Bulletin, February 1978, page 3587, "Cache Purge in Store-In-Cache System" by E. J. Annuziata, B. L. McGilvray and A. J. Sutton.)

If a CP is storing data through the SC, but has not received a release status signal from the SC which says that the data has been stored successfully, the BCE will place the data being stored and its address (The Castout Data) in a special line store buffer (LSB). The cache directory, however, shows the line of data as having been stored and therefore it is no longer within the cache, but it is within the LSB.

A special trigger C02 is turned on by the BCE when the BCE modifies the cache directory and is doing a store operation. This trigger stays on throughout the time period until the SC indicates the store is completed successfully. If an error occurs, the CP clocks are stopped, the MSF is signalled and the Error Handler microcode is invoked.

If an error occurs and the clock stops with the C02 trigger on, it means that the BCE has removed assignment of this line from the cache directory but has not completed the entire store back to CS. The Error Handler will then scan out the address and data, and store it in CS. As shown in Fig. 5, the following steps will be performed.

1)  Read the castout address from the LSB array and use that address to access storage.

2)  Scan into the "LSB Address Register" in sections L1A and L1B of the cache a value of "00". Scan in the controls to read and step the LSB.

3)  Read array command.

4)  Scan out the main storage data register - double word of data to be stored.

5)  Repeat steps 3 and 4 (fifteen more times) until an entire line of data (128 bytes) is scanned out and can be stored into CS using the MSF interface.

If an error occurs during the above operation, or the address cannot be fetched, the CP is put in a checkstop state and the contents of the cache and the castout register are set "invalid" in storage using the SC directory.

When the system subsequently accesses the bad data, the hardware will detect an error correction code bit combination that indicates the presence of an uncorrectable error (UE) in the data block. The hardware will signal the uncorrectable error condition to the hardware requestor

PO 9-83-004

(the CP). The UE signal is then passed to software by means of a machine check interrupt (MCI) which includes the address of the failing storage location. Software controls will ABEND that particular job and go on to process the next job in the queue. The next job may write new data into the storage location identified by the MCI. The new data will be stored with good ECC and the job will continue to run.

If the address is fetched and the data portion is in error, the address is given to the SC as follows.

a)    Set the MSF - SC Purge trigger in the SC. Setting this trigger on will cause the address to be stored to be set with error correction bits indicating "bad" data.

b)    Store address through the MSF - SC Q bus. The address is now stored with an indication of "bad" data.

c)    Reset MSF - SC Cache Purge trigger in the SC.

The Error Handler sequence can now be continued.

If a castout was in process, the line was saved from the LSB as described above. The data, 128 bytes, is stored through the SC Q Bus. If an error occurs, the CP is put in checkstop state. The SC directory is used to set the contents of the cache and the castout register "invalid" in storage.

If no error occurs, a command is issued to the SC for the CP to reset the castout register since the data has been stored into central storage. This is done after the data associated with the CO2 trigger is stored.

In order to determine if a cache-to-cache transfer was in process, additional tests are needed. Also, cache flags are set and tested and action taken based upon what CP is examined first by MSF, since two CPs could stop simultaneously and the MSF does not know which one had the error.

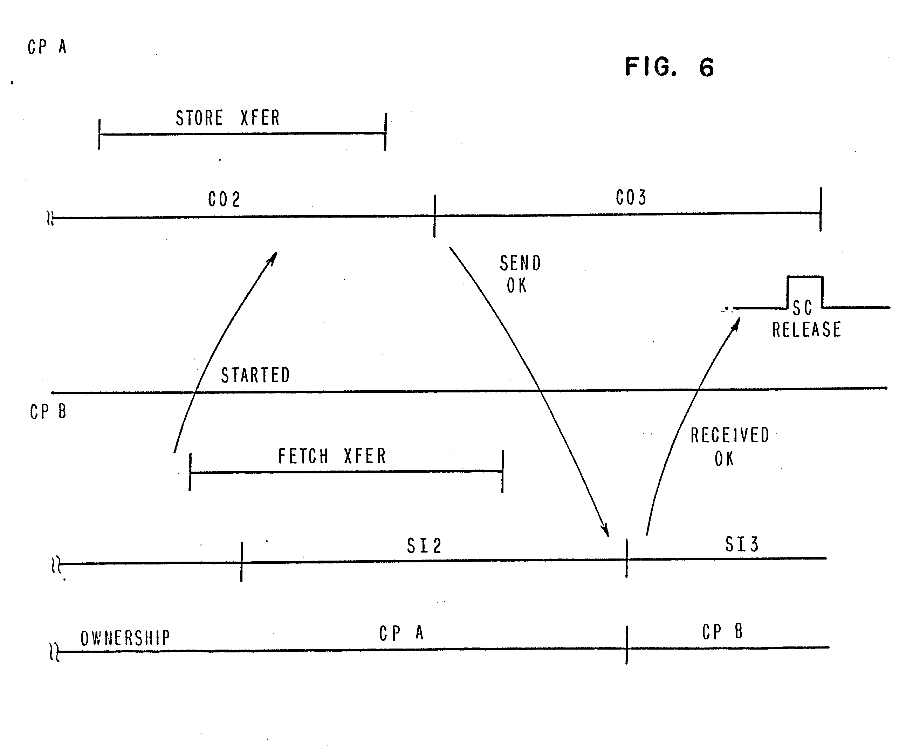

A flow diagram depicting a store "castout" from one CP to another "fetch" CP is shown in Fig. 6.

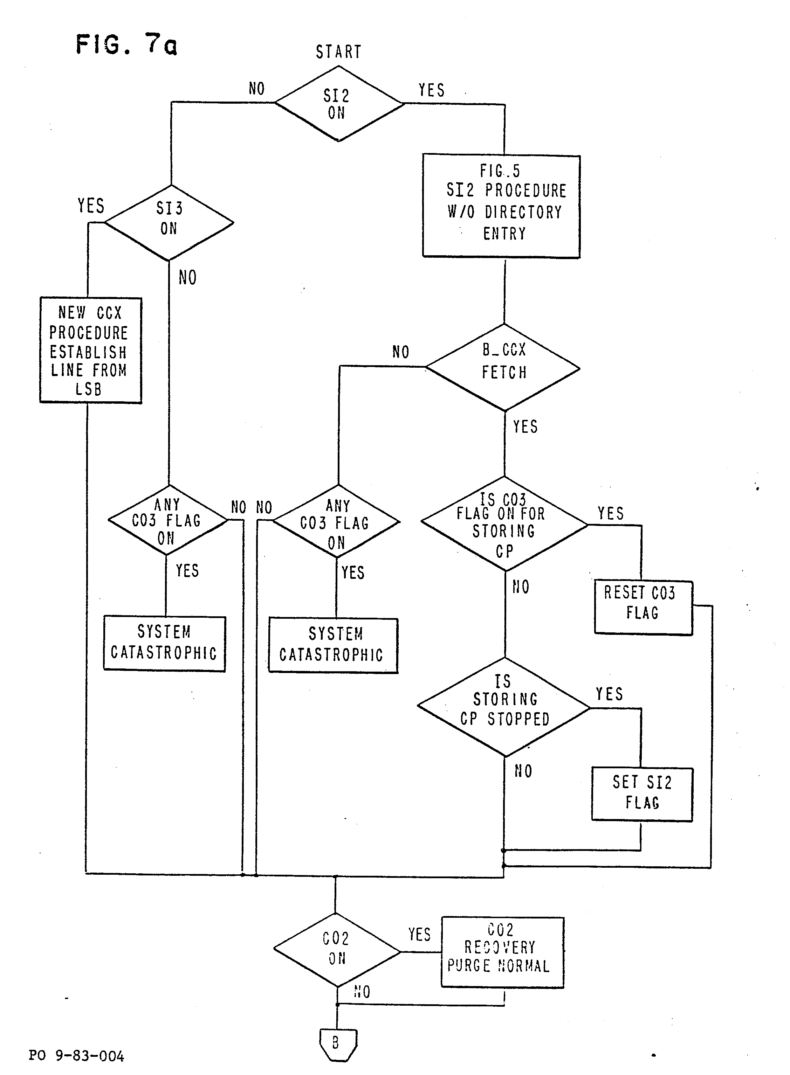

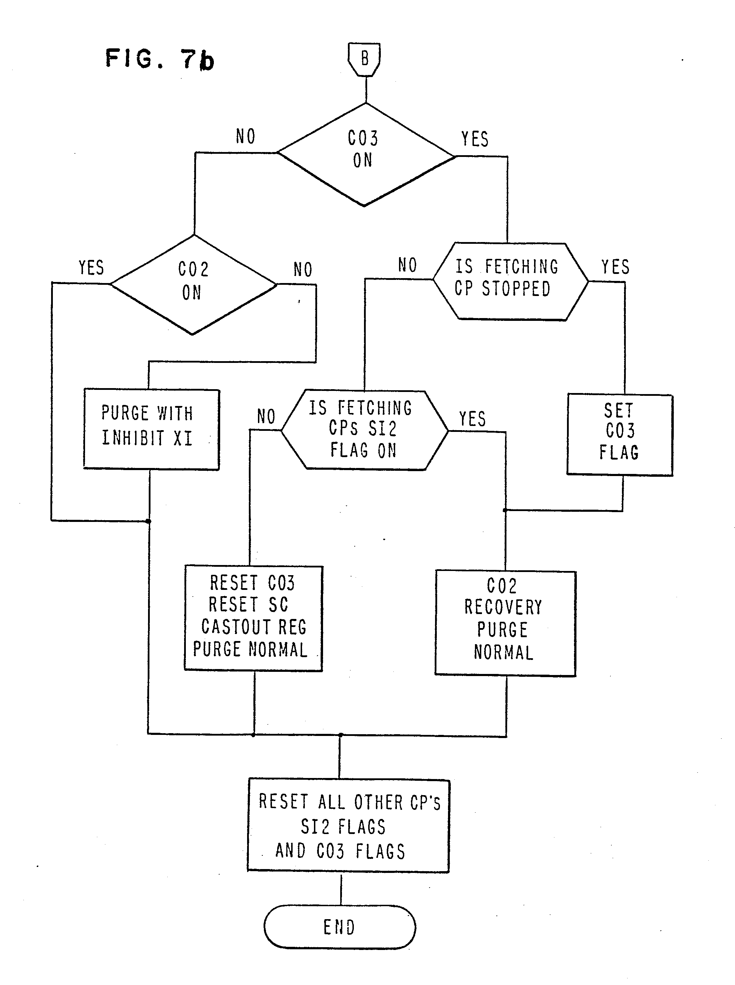

Fig. 7 includes additional steps for accomplishing error recovery during cache-to-cache transfers. If SI2 is on, do SI2 recovery as shown in Fig. 5, then determine if the cache-to-cache fetch in process trigger is on. If not, then check to see if any CO3 flags are on. If it is on, a system catastrophic event has occurred because of loss of data integrity. If it is not on, go to test CO2.

If the cache-to-cache fetch trigger is on, check if CO3 flag is on for the storing CP; if it is on, reset it and test CO2. Otherwise, check to see if the storing CP is stopped. If not, go to CO2; if it is stopped, set the SI2 flag for this CP, then test CO2.

If SI2 and SI3 are off, check to see if any CO3 flag is on. If any is on, the system has a catastrophic error because of loss of data integrity. If not, go to test CO2.

The SI2 flag is set when the first CP invalidates the line. The second CP must do CO2 recovery.

The CO3 flag is set when the first CP was in CO3 and another CP was stopped. This indicates a system catastrophic error if the first CP set CO3, and SI2 or SI3 is not on in the second CP. In this situation, ownership cannot be determined.

If the SI3 is on, restore the original cache line from the LFB, using the cache address backup register and compartment select register. (The SI2 and SI3 triggers are mutually exclusive.)

If the CO2 is off, test CO3. If CO2 is on, do CO2 recovery in accordance with the five steps described in connection with Fig. 5, then go to test CO3 (Fig. 7b).

If CO3 is off, reset all SI2 flags and CO3 flags for other CPs.

If CO3 is on, check to see if the fetching CP is stopped. If not, see if the SI2 flag for that CP is on. If not, reset CO3 and SC castout register and purge normally. If it is on, do CO2 recovery, purge normally and reset all SI2 flags and CO3 flags for other CPs. If the fetching CP is

0128353

stopped, set its CO3 flag on, do CO2 recovery and purge normally. Then reset all SI2 flags and CO3 flags for other CPs.

While the invention has been described with respect to a preferred embodiment thereof, those skilled in the art will recognize that the above and other changes may be made therein without departing from the scope of the invention.

PO 9-83-004

Claims

1.  In a data processing system, means for recovering from an error which occurs during a cache-to-cache transfer, comprising retry means including:

means for indicating whether a cache-to-cache transfer was taking place at the time of detection of an error;

means for identifying the cache which was the source of said transfer;

means for identifying each sink for said transfer;

means for retrying said data transfer; and

means for insuring that, if correct data cannot be written into one of said sinks, obsolete data will not subsequently be provided into the system from said one of said sinks.

2.  The recovery means of Claim 1 wherein said means for insuring comprises:

means for causing a data pattern representative of an uncorrectable error to be set into said one of said sinks.

3.  The recovery means of Claim 1, further comprising:

means for terminating the job during which said error was detected;

means for processing a new job; and

means for writing new data, related to said new job, into said one of said sinks.

4.  The recovery means of Claim 2 further comprising:

means for terminating the job during which said error was detected;

means for processing a new job; and

means for writing new data, related to said new job, into said one of said sinks.

0128353

FIG. 1

```
┌─────────────┐
│    MAIN     │
│  STORAGE    │
│     CS      │
└─────────────┘
       │
┌─────────────┐
│   SYSTEM    │
│ CONTROLLER  │
│     SC      │
└─────────────┘
       │
┌─────────────┐
│   BUFFER    │
│  CONTROL    │
│  ELEMENT    │
│     BCE     │
├─────────────┤
│  CACHE L1A  │
│- - - - - - -│
│  CACHE L1B  │  ←── CENTRAL
├─────────────┤        PROCESSOR
│  CASTOUT    │        CP
│  CONTROLS   │
├─────────────┤
│  CONTROLS   │
│     IE      │
└─────────────┘
```

FIG. 4

```
        ┌──────┐
        │  CS  │ ◄─────────────┐
        └──────┘               │
           ▲                   │
           │                   │
           ▼                   │
        ┌──────┐          ┌──────┐
        │  SC  │ ◄────────│ MSF  │
        └──────┘ ────────►└──────┘
         ▲  │  ▲            ▲
         │  │  └────────────┘
┌──────┐ │  ▼
│ BCE  │ │ ┌──────┐         │
└──────┘ └─│ BCE  │ ◄───────┘
    ▲      └──────┘
    └──────────┘
```

PO 9-83-004

FIG. 2a

BCE DATA FLOW

INVAL BUS
(2 BYTES SLOTTED)

D ADR BUS

| INVAL DIR | |
|---|---|
| 0 | 15 |

| IPTE OR SSK | |
|---|---|
| 0 | 31 |

P

ABCD
TO
ALGO

P

SYN 19-20

AO

| DECR | INCR |
|---|---|

| DIR ADR | |
|---|---|
| 19 | 24 |

| D REG | |
|---|---|
| 0 | 31 |

P

P

P

| LFB CMPR | |
|---|---|
| 1 | 24 |

| PREFIX | |
|---|---|
| 6 | 19 |

ZEROS

LFB
CMPR

PREFIX
CMPR

| AO | |
|---|---|
| 6 | 19 |

P

P

FIG. 2

| FIG. 2a | FIG. 2b | FIG. 2c |
|---|---|---|
| FIG. 2d | FIG. 2e | |

0128353

FIG. 2 b

# FIG. 2c

FIG. 2 d

FIG. 2e

0128353

FIG. 3a

FIG.3

| FIG.3a | FIG.3b |
|--------|--------|

FIG. 3b

0128353

PO 9-83-004

0128353

# FIG. 5

SI2 AND CO2 HANDLING

```
┌─────────────┐
│   INPUT     │
└─────────────┘
       │
       ▼
     ╱ SI2 ╲      YES
    ╱  ON   ╲──────────────────┐
    ╲       ╱                   │
     ╲     ╱                    ▼
       │ NO            ┌──────────────────────┐
       │              │ SCAN CACHE WRITE ADDRESS │
       │              │   BUFFER FOR ADDRESS     │
       │              └──────────────────────┘
       │                        │
       │                        ▼
       │              ┌──────────────────────┐
       │              │  INVALIDATE DIRECTORY   │
       │              │   ADDRESS IN CACHE      │
       │              └──────────────────────┘
       │◄───────────────────────┘
       ▼
     ╱ CO2 ╲      YES
    ╱  ON   ╲──────────────────────────────┐
    ╲       ╱                               │
     ╲     ╱                                │
       │ NO                                 ▼
       │                          ┌──────────────────┐
       │                          │   READ LSB AT     │
       │                          │  LOC 10 FOR       │
       │                          │  ADDRESS AND      │
       │                          │    COMMAND        │
       │                          └──────────────────┘
       │                                    │
       │                                    ▼
       │                          ┌──────────────────┐
       │                          │   DATA IS IN      │
       │                          │  LOC 0-F OF       │
       │                          │   LSB ARRAY       │
       │                          └──────────────────┘
       │                                    │
       │          ┌─────────────────────────┘
       ▼          ▼
┌─────────────────┐
│ GO TO NEXT STEP │
└─────────────────┘
```

FIG. 6

FIG. 7a

0128353

PO 9-83-004

0128353

FIG. 7b